Europäisches Patentamt

European Patent Office

Office européen des brevets

(11) Veröffentlichungsnummer: **0 304 735 B1**

# EUROPÄISCHE PATENTSCHRIFT

(45) Veröffentlichungstag der Patentschrift: **11.12.91**　　(51) Int. Cl.⁵: **B61H 15/00**

(21) Anmeldenummer: **88113099.1**

(22) Anmeldetag: **12.08.88**

---

(54) Bremszylinder für Schienenfahrzeuge.

---

(30) Priorität: **27.08.87 DE 3728606**

(43) Veröffentlichungstag der Anmeldung:
**01.03.89 Patentblatt 89/09**

(45) Bekanntmachung des Hinweises auf die
Patenterteilung:
**11.12.91 Patentblatt 91/50**

(84) Benannte Vertragsstaaten:
**AT CH DE ES FR GB IT LI SE**

(56) Entgegenhaltungen:
**AT-B- 359 551**
**DE-A- 2 201 082**
**DE-B- 2 554 806**

(73) Patentinhaber: **Bergische Stahl-Industrie**
**Papenbergerstrasse 38**
**W-5630 Remscheid(DE)**

(72) Erfinder: **Rocholl, Hans**
**Damaschke-Strasse 17a**
**W-5630 Remscheid(DE)**
Erfinder: **Klein, Horst**
**Erlen-Strasse 23**
**W-5630 Remscheid(DE)**

(74) Vertreter: **Jung, Hermann L., Dipl.-Chem.**
**Postfach 1728 Augusta-Allee 10**
**W-6380 Bad Homburg v.d.H.(DE)**

---

## Beschreibung

Die Erfindung betrifft einen Bremszylinder für Schienenfahrzeuge mit einem eingebauten einfach wirkenden Gestängesteller zur Aufrechterhaltung eines gleichmässigen Spiels zwischen den Bremsflächen, wobei der Gestängesteller zwei teleskopartig relativ zueinander verschiebbare Teile enthält, von denen ein Teil als Spindel mit einem Schraubgewinde ausgebildet ist und der andere Teil fest mit einer auf einem nicht selbsthemmendem Gewinde der Spindel aufgeschraubten Mutter verbunden ist und der die Mutter tragende Teil an einem die Kupplungsflächen tragenden Kupplungsteil angeordnet ist, wobei die Kupplungsflächen mit am Kolben des Betätigungszylinders angeordneten Kupplungsflächen zusammenwirken.

Derartige Gestängesteller sind in vielerlei Ausführungen bekannt wie zum Beispiel aus DE-A-22 01 082. Allen bekannten Konstruktionen gemeinsam ist aber der Nachteil, dass die im rauhen Praxisbetrieb sich ergebenden Schwingungen und Stösse auch den Gestängesteller beeinflussen, insofern als es zu unkontrollierten Drehungen im Kupplungsteil des Gestängestellers kommt, welche die Funktion des Gestängstellers ausser Kraft setzen können.

Der vorliegenden Erfindung liegt daher die Aufgabe zugrunde, mit relativ einfachen Mitteln jede ungewollte Drehung im Gestängesteller zu unterbinden, sodass die Nachstellung des Lüftspiels konstant bleibt und nicht zu unterschiedlichen Lüftspielen führt.

Die Lösung dieser Aufgabe besteht darin, dass das die Kupplungsflächen tragende Kupplungsteil in an sich bekannter Weise einen zentralen Bolzen trägt, welcher im Kolben des Betätigungszylinders geführt ist und dass auf diesem Bolzen eine Feder bzw. ein unter Druck stehender Teil aufgeklemmt ist, welcher gegen Verschiebung parallel zur Bolzenachse unverschieblich und gegen Verdrehung mit dem Bolzen festgelegt ist.

Vorteilhaft ist auf dem Bolzen eine etwa U-förmig gestaltete Feder aufgeklemmt, welche lose in einer Nut im Kolben liegend gegen achsparallele Verschiebung und beispielsweise mit einem abgeknickten Ende in einer radialen Bohrung liegend gegen Verdrehung, jeweils relativ zum Kupplungsteil, gesichert ist.

Zweckmässig ist die Klemmkraft der Feder kleiner als die das Kupplungsteil drehende Kraft.

Der Vorteil dieser erfindungsgemässen Ausbildung an einem Gestängesteller liegt auf der Hand. Die Feder unterdrückt weitgehend alle Schwingungen und Stösse in sämtlichen Achsen und verhindert dadurch, dass sich besonders bei Resonanzeffekten das Kupplungteil von selbst dreht und damit das Lüftungsspiel unzulässig verändert.

In den Zeichnungen ist eine beispielsweise Ausführungsform der Erfindung dargestellt und zwar zeigt:

Figur 1   einen Schnitt durch das Zylinderende der Einheit,

Figur 2   eine Feder nach der Erfindung auf dem Bolzen.

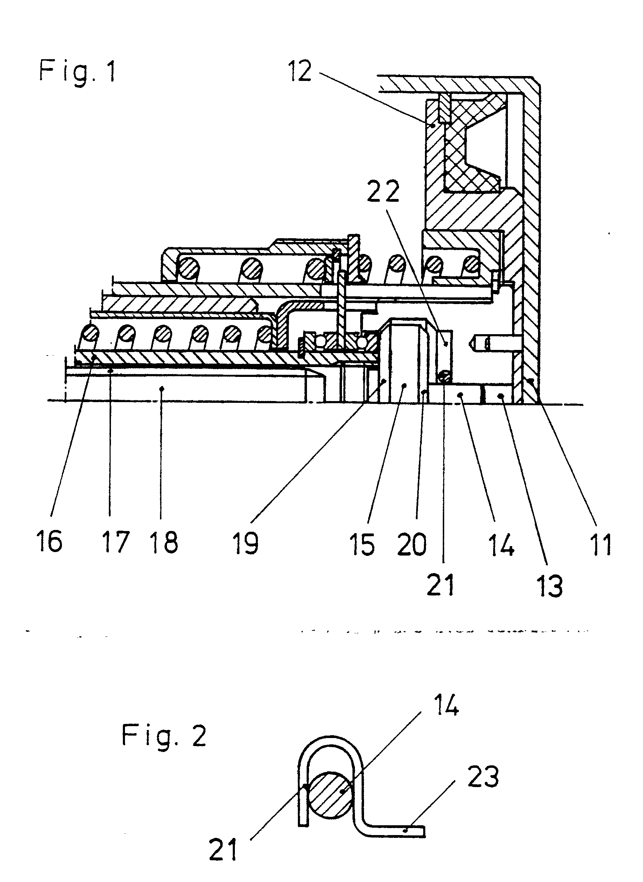

Nach Fig.1 ist im Kolben 12 des Betätigungszylinders 11 eine Bohrung 13 vorgesehen, in die sich ein Bolzen 14 erstreckt und welcher in der Bohrung 13 verschiebbar ist. Der Bolzen 14 ist mit dem Kupplungsteil 15 verbunden, welches seinerseits mit dem Rohr 16 verbunden ist, welches am nicht dargestellten Ende die Mutter trägt, die mit dem Gewinde 17 der Spindel 18 kämmt. Das Kupplungsteil 15 trägt die Kupplungsflächen 19 und 20, die mit den entsprechenden Kupplungsflächen im Kolben 12 zusammenarbeiten, derart, dass die Flächen 19 solange geschlossen bleiben, bis eine Nachstellung notwendig wird. Dann werden die Kupplungsflächen 19 geöffnet, aber die Kupplungsflächen 20 noch nicht geschlossen. In diesem Moment beginnt sich das Kupplungsteil 15 zu drehen. Zur Beruhigung dieser Drehbewegung ist auf dem Bolzen 14 eine Feder 21 aufgeklemmt, welche in einer Nut 22 liegt, wodurch eine Verschiebung der Feder 21 parallel zur Längsachse des Bolzens 14 verhindert wird.

Nach Fig. 2 hat die Feder 21 etwa U-förmige Gestalt, dessen einer Schenkel 23 verlängert und dann seitlich abgeknickt ist. Die Abknickung 23 korrespondiert mit einer radialen Bohrung (nicht dargestellt) in der Nut 22. Diese Abknickung liegt in der Federebene und verhindert, dass sich die Feder 21 auf dem Bolzen 14 bzw. dem daran befestigten Kupplungsteil 15 drehen kann, ohne dass eine Nachstellung notwendig ist. Die Kraft der Feder 21 muss daher in jedem Falle um soviel kleiner sein als die von der Mutter herrührende Kraft, die das Kupplungsteil 15 dreht, sodass die Verdrehung des Bolzens 14 bzw. des Kupplungsteils 15 für die Lüftspielnachstellung nicht blockiert wird.

Die Abknickung 23 kann auch um 90° zur Federebene verdreht angeordnet sein und wird dann in einer axial angeordneten Bohrung bzw. Nut fixiert.

Selbsterständlich kann anstelle der Feder 21 auch ein anderes unter Federkraft gegen den Bolzen 14 gedrücktes Teilverwendet werden. Auch andere Dämpfungsmaterialien können verwendet werden. Auch kann das Federmaterial einen anderen als runden Querschnitt besitzen, wie z.B. Bandstahl.

## Patentansprüche

1.   Bremszylinder, insbesondere für Schienenfahrzeuge, mit einem eingebauten einfach wirkenden Gestängesteller zur Aufrechterhaltung eines gleichmässigen Spiels zwischen den Bremsflächen, wobei der Gestängesteller zwei teleskopartig relativ zueinander verschiebbare Teile enthält, von denen ein Teil als Spindel (18) mit einem Schraubgewinde (17) ausgebildet ist und der andere Teil fest mit einer auf einem nicht selbsthemmenden Gewinde der Spindel aufgeschraubten Mutter verbunden ist und der die Mutter tragende Teil an einem die Kupplungsflächen tragenden Kupplungsteil (15) angeordnet ist, wobei die Kupplungsflächen (19,20) mit am Kolben (12) des Betätigungszylinders (11) angeordneten Kupplungsflächen zusammenwirken, dadurch gekennzeichnet, dass das die Kupplungsflächen (19,20) tragende Kupplungsteil (15) in an sich bekannter Weise einen zentrischen Bolzen (14) trägt, welcher im Kolben (12) des Betätigungszylinders (11) geführt ist und dass auf diesem Bolzen (14) eine Feder (21) bzw. ein unter Druck stehender Teil aufgeklemmt ist, welcher gegen Verschiebung parallel zur Bolzenachse unverschiebbar und gegen Verdrehung mit dem Bolzen festgelegt ist.

2. Bremszylinder nach Anspruch 1, dadurch gekennzeichnet, dass auf dem Bolzen (14) eine etwa U-förmig gestaltete Feder (21) (Fig.2) aufgeklemmt ist, welche lose in einer Nut (22) im Kolben (12) liegend gegen achsparallele Verschiebung und beispielsweise mit einem abgeknickten Ende (23) in einer radialen Bohrung liegend gegen Verdrehung, jeweils relativ zum Kupplungsteil (15), gesichert ist.

3. Bremszylinder nach Anspruch 1 oder 2, dadurch gekennzeichnet, dass die Klemmkraft der Feder (21) kleiner als die das Kupplungsteil (15) drehende Kraft ist.

## Claims

1. Brake cylinder, particularly for rail vehicles, with a built-in single-acting slack adjuster for maintaining an even clearance between the brake surfaces, the slack adjuster containing two mutually telescopically displaceable parts, of which one part is designed as a spindle (18) with a screw thread (17) and the other part is permanently connected to a nut screwed onto the spindle by means of a reversible thread (not self-locking) and the part carrying the nut is located on a clutch part (15) carrying the clutch surfaces, the clutch surfaces (19, 20) interacting with clutch surfaces located on the piston (12) of the actuating cylinder (11), characterized in that the clutch part (15) carrying the clutch surfaces (19, 20) carries, in a manner in itself known, a central pin (14) which is guided in the piston (12) of the actuating cylinder (11) and that a spring (21) or a part subjected to pressure is clamped on this pin (14), which spring (21) or part subjected to pressure is translationally secured so that it cannot be displaced parallel to the axis of the pin and is secured against rotation with the pin.

2. Brake cylinder according to Claim 1, characterized in that an approximately U-shaped spring (21) is clamped on the pin (14) (Fig. 2), which spring is secured against displacement, parallel to the axis, relative to the clutch part (15) by being loosely located in a groove (22) in the piston (12), and is secured against rotation relative to the clutch part (15) by means, for example, of a kinked end (23) located in a radial hole.

3. Brake cylinder according to Claim 1 or 2, characterized in that the clamping force of the spring (21) is smaller than the force rotating the clutch part (15).

## Revendications

1. Cylindre de frein, en particulier pour véhicules sur rails, avec un régleur de timonerie à simple effet incorporé pour le maintien d'un jeu uniforme entre les surfaces de freinage, le régleur de timonerie comportant deux parties pouvant coulisser de manière télescopique l'une par rapport à l'autre, dont l'une est configurée comme une tige (18) avec un filet (17) et l'autre est reliée de façon rigide avec un écrou vissé sur un filet non autobloquant de la tige, la partie portant l'écrou étant disposée sur une partie d'accouplement (15) portant les surfaces d'accouplement, les surfaces d'accouplement (19, 20) coopérant avec des surfaces d'accouplement situées au piston du cylindre d'actionnement (11), caractérisé en ce que la partie d'accouplement (15) portant les surfaces d'accouplement (19, 20) porte de manière connue en soi un boulon centré (14), qui est guidé dans le piston (12) du cylindre d'actionnement (11) et que, sur ce boulon (14), est serré un ressort (21) ou une pièce se trouvant sous pression qui est bloquée en translation parallèle à l'axe du boulon et bloquée en rotation avec le boulon.

2. Cylindre de frein selon la revendication 1, caractérisé en ce que, sur le boulon (14), est serré un ressort (21) environ en forme de U (fig. 2), qui, se trouvant libre dans une rainure (22) du piston (12), est bloqué en translation parallèle à l'axe et est bloqué en rotation, par exemple, avec une extrémité coudée (23) placée dans un trou radial, chaque fois par rapport à la partie d'accouplement (15).

3. Cylindre de frein selon la revendication 1 ou 2, caractérisé en ce que la force de serrage du ressort (21) est inférieure à la force faisant tourner la partie d'accouplement (15).

Fig. 1

Fig. 2